# EUROPÄISCHE PATENTSCHRIFT

(11) **EP 1 430 571 B1**
(45) Veröffentlichungstag und Bekanntmachung des Hinweises auf die Patenterteilung: **15.03.2006**
(21) Anmeldenummer: 02767124.7
(22) Anmeldetag: 23.08.2002
(51) Int. Cl.: H01R 39/38

(54) **BÜRSTENHALTER FÜR EINE ELEKTRISCHE MASCHINE**
BRUSH HOLDER FOR AN ELECTRICAL MACHINE
PORTE-BALAI POUR UNE MACHINE ELECTRIQUE

(30) Priorität: 21.09.2001 DE 10146568
(43) Veröffentlichungstag der Anmeldung: 23.06.2004
(73) Patentinhaber: ROBERT BOSCH GMBH, 70442 Stuttgart (DE)
(72) Erfinder: WEHRLE, Andreas, 77652 Offenburg (DE)
(86) Internationale Anmeldenummer: PCT/DE2002/003094
(87) Internationale Veröffentlichungsnummer: WO 2003/028171

(56) Entgegenhaltungen:
- DE-A- 2 606 922
- FR-A- 1 297 270
- US-A- 3 158 772

## Beschreibung

### Stand der Technik

Die Erfindung geht aus von einem Bürstenhalter für eine einen Kommutator aufweisende elektrische Maschine, insbesondere für einen Gleichstrommotor in Kraftfahrzeugen, nach dem Oberbegriff des Anspruchs 1.

Bei solchen Kommutatormaschinen, wie sie z.B. als Gleichstrommotoren im Kraftfahrzeugbau Verwendung finden, ist zur Erzielung einer geringen Welligkeit des vom Gleichstrommotor abgegebenen Drehmoments und einer großen Leistungsbandbreite des Gleichstrommotors eine exakte Kommutierung wichtig. Hierzu ist es erforderlich, daß bei in beiden Drehrichtungen betriebenen Motoren die in dem Köcher des Bürstenhalters geführte Kommutator-, Kollektor-, Stromwender- oder Kohlebürste, im folgenden kurz Bürste genannt, nicht in Drehrichtung des Kommutators kippen kann, da dieses Kippen eine Verschiebung der vom Idealzustand abweichenden Kommutierung verursacht und zu Veränderungen derStromphasenlage, zur Geräuschentwicklung und Schwingungen führt. Um dieses seitliche Kippen zu verhindern, muß die Bürste im Köcher so geführt werden, daß einerseits jedwede seitliche Bewegung der Bürste in beide Drehrichtungen des Kommutators blockiert wird und andererseits die Bürste in Richtung ihrer Längsachse bzw. der Längsachse des Köchers verschiebbar bleibt.

Die DE 26 06 922 A offenbart einen Bürstenhalter für eine einen Kommutator aufweisende elektrische Maschine, insbesondere für einen Gleichstrommotor in Kraftfahrzeugen, mit einem einen eckigen lichten Querschnitt aufweisenden Köcher, mit einer im Köcher längs der Köcherachse verschieblich aufgenommenen Bürste, die aus zwei miteinander elektrisch kontaktierten Bürstenteilen zusammengesetzt ist, und mit mindestens einer die Bürste zu deren Ausschieben aus dem Köcher in Richtung der Köcherachse beaufschlagenden Bürstenandruckfeder. Die beiden Bürstenteile sind im wesentlichen quaderförmig ausgebildet und im Köcher nebeneinander parallel beabstandet und über den kommutatorseitigen Köcherrand vorstehend angeordnet und greifen zwischen die beiden Bürstenteile Spreizmittel so ein, daß die voneinander abgekehrten Seitenflächen der beiden Bürstenteile an einander in Umfangsrichtung des Kommutators gegenüberliegenden Köcherwänden kraftschlüssig angelegt sind. Die Spreizmittel weisen ein zwischen der mindestens einen Bürstenandruckfeder und den Bürstenteilen angeordnetes Kraftübertragungsglied auf, das aus der Druckkraft der mindestens einen Bürstenandruckfeder zu den Köcherwänden hin gerichtete Kraftkomponenten ableitet. Das Kraftübertragungsglied weist zwei unter einem Schrägungswinkel zur Köcherachse verlaufende Keilflächen, von denen jeweils eine in einem Bürstenteil so angebracht ist, daß die Keilflächen einander zugekehrt sind, und einen auf den Keilflächen aufliegenden Kraftübertragungskörper auf, der von der Druckkraft der mindestens einen Bürstenandruckfeder in Richtung der Köcherachse beaufschlagt ist.

Bei einem bekannten Bürstenhalter der eingangs genannten Art (DE-PS 169 904) ist zur Vermeidung einer seitlichen Bewegung der Bürste beim Drehen des Kommutators die Bürste aus zwei keilförmigen Bürstenteilen zusammengesetzt, die im Köcher übereinander mit aufeinander aufliegenden Keilflächen einliegen. Das obere Bürstenteil wird stirnseitig von der Bürstenandruckfeder beaufschlagt, während das untere Bürstenteil mit seiner eine Kontaktfläche bildenden Stirnfläche auf dem Kommutator aufliegt. Durch die Keilwirkung zwischen den beiden Bürstenteilen wird die Druckkraft der Bürstenandruckfeder in eine radiale Kraftkomponente, die das untere Bürstenteil auf den Kommutator aufpreßt, und in eine dazu rechtwinklige, tangentiale Kraftkomponente zerlegt, die das untere Bürstenteil an die eine und das obere Bürstenteil an die andere von zwei in Drehrichtung des Kommutators gegenüberliegenden Köcherwänden anpreßt. Als kritisch hat sich dabei die durch die Keilform sich ergebende kurze Führungslänge der Bürstenteile auf jeweils einer Seitenfläche erwiesen, da sich bereits nach relativ geringer Abnutzung des unteren Bürstenteils aufgrund dieser kurzen Führungslänge wiederum eine Neigung zum Kippen des unteren Bürstenteils einstellt, insbesondere, wenn der Gleichstrommotor mit umkehrbarer Drehrichtung betrieben wird.

### Vorteile der Erfindung

Der erfindungsgemäße Bürstenhalter mit den Merkmalen des Anspruchs 1 hat den Vorteil, daß durch die Anordnung der beiden im wesentlichen quaderförmig ausgebildeten Bürstenteile so, daß sie sich voneinander beabstandet parallel nebeneinander in Achsrichtung des Köchers erstrecken und über den kommutatorseitigen Köcherrand vorstehen, und durch ihre Abspreizung voneinander die beiden elektrisch miteinander verbundenen Bürstenteile an der Wandung des Köchers spielfrei zwangsgeführt sind, und zwar unabhängig von der Drehrichtung des Kommutatormotors, und dabei über eine große Führungsfläche an der Köcherwandung verfügen. Dadurch wird eine exakte Kommutierung entsprechend der vorgegebenen Lage des Köchers zum Kommutator erreicht. Durch die spielfreie Führung wird die gesamte Stirnfläche der beiden Bürstenteile als elektrische Kontaktfläche zum Kommutator genutzt und zwar unabhängig von der Drehrichtung des Kommutators, so daß die Kommutierung exakt über das festgelegte Verhältnis zwischen der lichten Breite des Köchers und der Breite der Kommutatorlamellen stattfindet. Auch die bei bekannten Bürstenhaltern bei Verschleiß durch das Führungsspiel im Köcher sich einstellenden, gegenüberliegenden Einlaufstellen an der Bürste und die dadurch bedingte Verschiebung des elektrischen Kontakts weg vom Zentrum der Bürste hin zu den Bürstenrändern, werden vermieden.

Durch die in den weiteren Ansprüchen aufgeführten Maßnahmen sind vorteilhafte Weiterbildungen und Verbesserungen der im Anspruch 1 angegebenen Brennkraftmaschine möglich.

Gemäß einer bevorzugten Ausführungsform der Erfindung weisen die Spreizmittel ein zwischen der mindestens einen Bürstenandruckfeder und den beabstandeten Bürstenteilen angeordnetes Kraftübertragungsglied auf, das aus der Druckkraft der mindestens einen Bürstenandruckfeder Kraftkomponenten ableitet, die zu den in Dreh- oder Umfangsrichtung des Kommutators einander gegenüberliegenden Köcherwänden hin gerichtet sind.

Gemäß einer vorteilhaften Ausführungsform der Erfindung weist ein solches Kraftübertragungsglied in jedem Bürstenteil ausgebildeten Keilflächen, die durch Keileinschnitte in den einander gegenüberliegenden Seitenflächen der Bürstenteile gebildet sind, einen Kraftübertragungskörper, vorzugsweise eine Walze, die auf den Keilflächen aufliegt, und ein vorzugsweise als T-Profil ausgebildetes Koppelelement auf, das einerseits eine Abstützfläche für die mindestens eine Bürstenandruckfeder aufweist und andererseits in den Zwischenraum zwischen den beabstandeten Bürstenteilen hineinragt und unter der Druckkraft der mindestens einen Bürstenandruckfeder auf dem Kraftübertragungskörper aufliegt. Beispielsweise sind die Keileinschnitte zur Keilflächenbildung etwa mittig in die Seitenflächen eingebracht, und erstrecken sich wie dann auch vorzugsweise der Kraftübertragungskörper und das Koppelelement über die gesamte, in Achsrichtung des Kommutators gesehenen Tiefe der beiden Bürstenteile. Durch diese innerhalb der Bürste tiefliegenden Keileinschnitte werden die beiden Bürstenteile relativ nahe dem Austrittsrand der Bürste an die Köcherwände angepreßt und besitzen eine recht große Führungsfläche, so daß eine völlig spielfreie Axialführung der Bürstenteile in dem Köcher gewährleistet ist.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines Bürstenhalters in Zuordnung zu einem ausschnittweise dargestellten Kommutator, schematisiert,
- Fig. 2: eine vergrößerte Darstellung des Ausschnitts II in Fig. 1,
- Fig. 3: einen Schnitt des Bürstenhalters längs der Linie III - III in Fig. 1 in Zuordnung zu dem in Seitenansicht ausschnittweise dargestellten Kommutator,
- Fig. 4: eine perspektivische Explosionsdarstellung von Bürste und Spreizmittel im Bürstenhalter gemäß Fig. 1 - 3,
- Fig. 5: eine vergrößerte Ansicht eines Kraftübertragungsglieds im Bürstenhalter gemäß einem weiteren Ausführungsbeispiel.

### Beschreibung des Ausführungsbeispiels

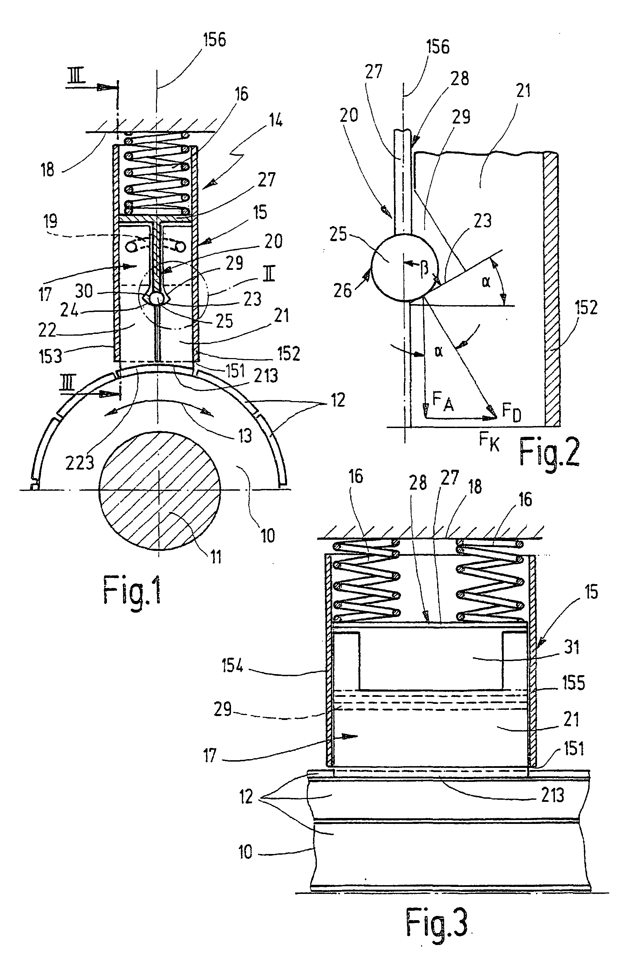

Der in Fig. 1 im Längsschnitt zu sehende Bürstenhalter 14 für einen Gleichstrommotor, der beispielsweise als Antriebsmotor für die elektrische Sitzverstellung oder Fensterbetätigung in Kraftfahrzeugen verwendet wird, als Ausführungsbeispiel für eine allgemeine elektrische Kommutatormaschine, ist in Zuordnung zu einem nur ausschnittweise illustrierten Stromwender, Kollektor oder Kommutator 10 des Gleichstrommotors dargestellt, der zusammen mit einem Anker oder Rotor des Gleichstrommotors drehfest auf einer Anker-oder Motorwelle 11 sitzt. Mit 12 sind die Lamellen des Kommutators 10 bezeichnet. Wie durch den Drehrichtungspfeil 13 symbolisiert ist, ist der Gleichstrommotor in inverser Drehrichtung betreibbar. Je nach Polzahl der im Anker einliegenden Ankerwicklung sind zwei Bürstenhalter 14 oder ein ganzzahliges Vielfaches davon vorhanden, die um gleiche Umfangswinkel am Umfang des Kommutators 10 angeordnet und mit ihrer Längsachse radial zum Kommutator 10 ausgerichtet sind. Die Bürstenhalter 14 sind auf einer im Motorgehäuse festgelegten Trägerplatte gehalten.

Jeder Bürstenhalter 14 weist einen Köcher 15 mit einem eckigen lichten Querschnitt auf, der im Ausführungsbeispiel der Fig. 1 als Hülse ausgebildet ist, die nach Einsetzen einer Stromwender-, Kommutator-, Kollektor- oder Kohlebürste, im folgenden kurz Bürste 17 genannt, und von zwei Bürstenandruckfedern 16 (Fig. 3) mit einem nur schematisch angedeuteten Deckel 18 an dem vom Kommutator 10 abgekehrten Hülsenende verschlossen wird, so daß die zwischen der Bürste 17 und dem Deckel 19 einliegenden Bürstenandruckfedern 16, die als Druckfedern ausgebildet sind, sich am Deckel 18 abstützen. Die Bürste 17 ist axial verschieblich im Köcher 15 an den Hülsenwänden geführt, steht über den kommutatorseitigen Hülsenrand 151 vor und preßt sich mit einer an ihrer Stirnfläche sich ausbildenden Kontaktfläche unter dem Druck der Bürstenandruckfedern 16 auf die Kommutatorlamellen 12 des Kommutators 10 auf.

Zur Erzielung einer exakten Kommutierung, die bei Gleichstrommotoren mit hohen Anforderungen an die Momentenwelligkeit und Leistungsbandbreite besonders wichtig ist, darf die axiale Führung der Bürste 17 kein Spiel in Drehrichtung des Kommutators 10 zwischen Bürste 17 und Köcher 15 zulassen, das beim Rotieren des Kommutators 10 ein Ankippen der Bürste 17 aus ihrer exakt radialen Ausrichtung im Köcher 15 bewirken und damit eine Verschiebung der vom Idealzustand abweichenden Kommutierung zur Folge haben würde. Gleichzeitig muß aber sichergestellt werden, daß die Bürste 17 in Axialrichtung ohne zu großen Reibwiderstand zwischen Bürste 17 und Köcherwänden axial verschiebbar bleibt. Um diese gegensätzlichen Forderungen zu erfüllen, ist die Bürste 17 aus zwei im wesentlichen quaderförmigen Bürstenteilen 21, 22 zusammengesetzt, die im Köcher 15 parallel nebeneinander über den Köcherrand 151 vorstehend angeordnet sind und mit ihren beiden Stirnflächen 213, 223 auf dem Kommutator 10 bzw. auf dessen Kommutatorlamellen 12 aufliegen. Die beiden Bürstenteile 21, 22 sind elektrisch miteinander verbunden, was durch die in Fig. 1 strichliniert eingezeichnete Verbindungslitze 19 bewirkt wird. In dem Ausführungsbeispiel sind die beiden Bürstenteile 21, 22 identisch ausgebildet und weisen gleiche Abmessungen auf. Ihre Anordnung im Köcher 15 ist so vorgenommen, daß eine in der Köcherachse 156 zwischen den einander zugekehrten Seitenfläche 211, 221 der beiden Bürstenteile 21, 22 verlaufende Ebene durch die Achse des Kommutators 10 verläuft. Zwischen die beiden Bürstenteile 21, 22 greifen Spreizmittel so ein, daß die voneinander abgekehrten Seitenflächen 212 und 222 der Bürstenteile 21, 22 an in Drehrichtung des Kommutators 10 einander gegenüberliegenden Köcherwänden 152, 153 kraftschlüssig angelegt sind.

In dem beschriebenen Ausführungsbeispiel des Bürstenhalters 14 weisen die Spreizmittel ein zwischen den Bürstenandruckfedern 16 und den Bürstenteilen 21, 22 eingeschaltetes Kraftübertragungsglied 20 auf, das aus der von den Bürstenandruckfedern 16 aufgebrachten Druckkraft zu den Köcherwänden 152, 153 hin gerichtete Kraftkomponenten ableitet. Das im folgenden noch näher beschriebene Kraftübertragungsglied 20 zerlegt - wie dies in Fig. 2 für das Bürstenteil 21 durch die Kraftvektoren bildlich dargestellt ist - die von den Bürstenandruckfedern 16 aufgebrachte Druckkraft F_{D} in eine radiale Kraftkomponente F_{A}, die die Bürstenteile 21, 22 an den Kommutator 10 anpreßt, und in zwei dazu rechtwinklige, tangentiale Kraftkomponenten F_{K}, welche die beiden Bürstenteile 21, 22 an die in Umfangsrichtung des Kommutators 10 einander gegenüberliegenden Köcherwände 152, 153 andrücken. Das Kraftübertragungsglied 20 weist hierzu zwei an den Bürstenteilen 21, 22 angeordnete Keilflächen 23, 24, einen hier als Walze 25 ausgebildeten Kraftübertragungskörper 26 sowie ein hier als T-Profil 27 ausgebildetes Koppelelement 28 auf, das einen Kraftfluß von den beiden Bürstenandruckfedern 16 zu dem Kraftübertragungskörper 26 herstellt. Die beiden Keilflächen 23, 24 verlaufen unter einem spitzen Anstiegswinkel α gegenüber einer zur Köcherachse 156 quer ausgerichteten Bezugsfläche und sind einander zugekehrt. Jeweils eine Keilfläche 23 bzw. 24 ist durch einen Keileinschnitt 29 bzw. 30 in einem Bürstenteil 21, 22 realisiert. Die Keileinschnitte 29, 30 sind in die einander zugekehrten Seitenflächen 211 und 221 der beiden Bürstenteile 21, 22 etwa mittig eingeschnitten und erstrecken sich dabei beispielsweise über die gesamte, in Achsrichtung des Kommutators 10 gesehene Länge der beiden Bürstenteile 21, 22 (vgl. Fig. 3). Der ebenfalls über die gesamte Länge der Bürstenteile 21, 22 sich erstreckende Kraftübertragungskörper 26, hier die Walze 25, liegt in den beiden Keileinschnitten 29, 30 ein und wird über das Koppelelement 28 auf die Keilflächen 23; 24 aufgedrückt, so daß er die Druckkraft der beiden Bürstenandruckfedern 16 auf die beiden Bürstenteile 21, 22 überträgt.

Wie aus Fig. 2 zu entnehmen ist, sind die Kraftkomponenten F_{A} bzw. F_{K}, mit welchen die Bürstenteile 21, 22 mit ihren Stirnflächen 213 und 223 an den Kommutator 10 und mit ihren Seitenflächen 212 und 222 an die Köcherwände 152, 153 angepreßt werden von dem Anstiegswinkel α der Keilflächen 23, 24 abhängig, so daß durch entsprechende Wahl des Anstiegswinkels α das Verhältnis der Kraftkomponenten F_{A} und F_{K} beeinflußt werden kann. Der Anstiegswinkel α ist der um 90° reduzierte Schrägungswinkel β, den die Keilfläche 23 bzw. 24 mit der Köcherachse 156 einschließt (α = 90° - β).

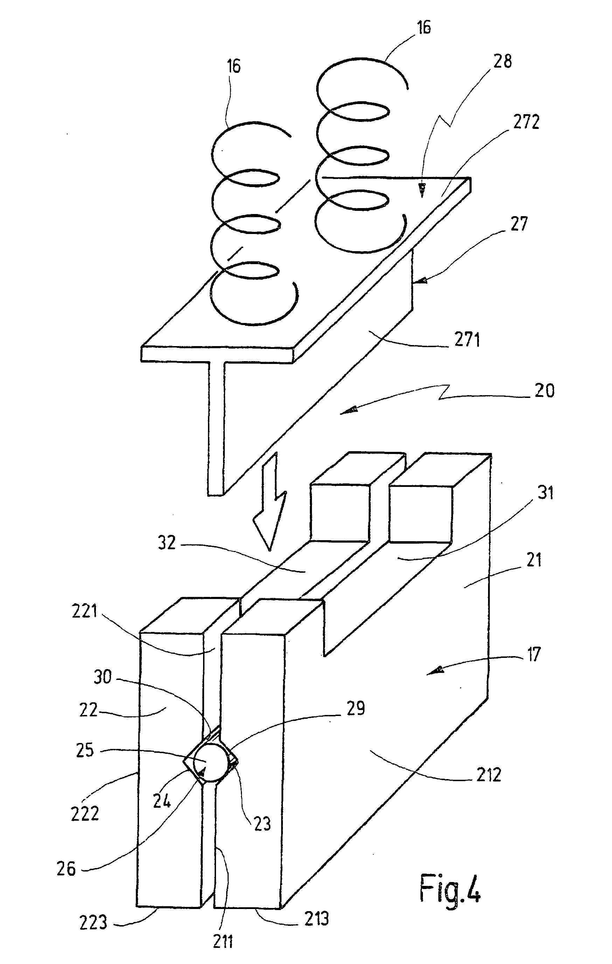

In Fig. 4 ist das Kraftübertragungsglied 20 in Verbindung mit den beiden Bürstenteilen 21, 22 der Bürste 17 und den beiden Bürstenandruckfedern 16 in Explosionsdarstellung skizziert. Die Walze 25 liegt in den Keileinschnitten 29, 30 der Bürstenteile 21, 22 ein und stützt sich auf den Keilflächen 23, 24 ab. Das T-Profil 27 ragt mit seinem Stegteil 271 in den Zwischenraum zwischen den beabstandeten Bürstenteilen 21, 22 hinein und liegt mit seinem freien Stirnende auf der Walze 24 auf. Der Querteil 272 des T-Profils 27 überdeckt die den Bürstenandruckfedern 16 zugekehrten Stirnseiten der Bürstenteile 21, 22 mit Abstand und bildet eine Andruckfläche für die Bürstenandruckfedern 16 (vgl. auch Fig. 3).

Zur Massereduzierung der Bürste 17 kann in jedem Bürstenteil 21, 22 von der dem Querteil 272 des T-Profils 27 zugekehrten Stirnseite her eine Aussparung 31, 32 eingebracht sein, die nur so tief ist, daß sie im Bereich oberhalb der Keileinschnitte 29, 30 verbleibt. Die Aussparungen 31, 32 sind bezogen auf die Länge der Bürstenteile 21, 22 in Richtung der Kommutatorachse etwa mittig eingebracht, so daß an dem in Fig. 4 zu sehenden vorderen und hinteren Ende der Bürstenteile 21, 22 die volle Höhe der quaderförmigen Bürstenteile 21, 22 erhalten bleibt und damit durch größere Führungsflächen an den Bürstenteilen 21, 22 auch eine gute Führung an der in Achsrichtung des Kommutators 10 gesehenen vorderen Köcherwand 154 und hinteren Köcherwand 155 (Fig. 3) gewährleistet ist.

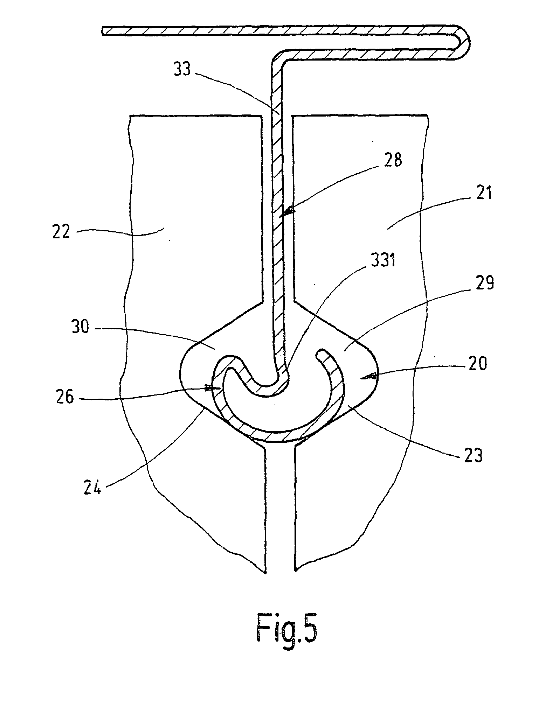

Das in Fig. 5 in Verbindung mit den beiden Bürstenteilen 21, 22 dargestellte Kraftübertragungsglied ist insoweit modifiziert, als das wiederum etwa T-förmige Koppelelement 28 und der Kraftübertragungskörper 26 einstückig zu einem Formteil 33 aus Kunststoff zusammengefaßt sind, das im Übergangsbereich von Koppelelement 28 zum Kraftübertragungskörper 26 einen biegeelastischen Abschnitt 331 aufweist. Der den Kraftübertragungskörper 26 bildende Teil des Formteils 33 ist zumindest im Bereich seiner Auflage auf den Keilflächen 23, 24 in den Keileinschnitten 29, 30 der beiden Bürstenteile 21, 22 zylinderförmig gewölbt, so daß - wie in Fig. 2 dargestellt ist - wiederum die von der Bürstenandruckfeder 16 auf das Formteil 33 aufgebrachte Druckkraft F_{D} an den Keilflächen 23, 24 eine radiale Kraftkomponente F_{A} und eine tangentiale Kraftkomponente F_{K} erzeugt, so daß letztere die Bürstenteile 21 bzw. 22 in Richtung Köcherwand drückt. Der biegeelastische Abschnitt 331 sorgt für eine gleichmäßige Verteilung des von der Bürstenandruckfeder 16 erzeugten Anpreßdrucks auf beide Bürstenteile 21, 22, und zwar auch dann, wenn z.B. ein ungleicher Abrieb an den Bürstenteilen 21, 22 auftritt.

Der erfindungsgemäße Bürstenhalter ist nicht nur bei einem Trommel kommutator, wie hier beschrieben, anwendbar, sondern eignet sich auch gleich vorteilhaft für einen Stirn- oder Plankommutator. In gewissen Anwendungsfällen reicht eine Bürstenandruckfeder 16 zum Andrücken der durch die beiden Bürstenteile 21, 22 gebildete Bürste 17 aus. Diese wird dann beispielsweise als Schraubendruckfeder mit ovaler Federform ausgeführt.

## Patentansprüche

1. Bürstenhalter für eine einen Kommutator (10) aufweisende elektrische Maschine, insbesondere für einen Gleichstrommotor in Kraftfahrzeugen, mit einem einen eckigen lichten Querschnitt aufweisenden Köcher (15), mit einer im Köcher (15) längs der Köcherachse (156) verschieblich aufgenommenen Bürste (17), die aus zwei miteinander elektrisch kontaktierten Bürstenteilen (21, 22) zusammengesetzt ist, und mit mindestens einer die Bürste (17) zu deren Ausschieben aus dem Köcher (15) in Richtung der Köcherachse (156) beaufschlagenden Bürstenandruckfeder (16), wobei die beiden Bürstenteile (21, 22) im wesentlichen quaderförmig ausgebildet und im Köcher (15) nebeneinander parallel beabstandet und über den kommutatorseitigen Köcherrand (151) vorstehend angeordnet sind und zwischen die beiden Bürstenteile (21, 22) Spreizmittel so eingreifen, daß die voneinander abgekehrten Seitenflächen (211, 221) der beiden Bürstenteile (21, 22) an einander in Umfangsrichtung des Kommutators (10) gegenüberliegenden Köcherwänden (152, 153) kraftschlüssig angelegt sind, wobei die Spreizmittel ein zwischen der mindestens einen Bürstenandruckfeder (16) und den Bürstenteilen (21, 22) angeordnetes Kraftübertragungsglied (20) aufweisen, das aus der Druckkraft (F_{D}) der mindestens einen Bürstenandruckfeder (16) zu den Köcherwänden (152, 153) hin gerichtete Kraftkomponenten (F_{K}) ableitet, und wobei das Kraftübertragungsglied (20) zwei unter einem Schrägungswinkel (β) zur Köcherachse (156) verlaufende Keilflächen (23, 24), von denen jeweils eine in einem Bürstenteil (21, 22) so angebracht ist, daß die Keilflächen (23, 24) einander zugekehrt sind, und einen auf den Keilflächen (23, 24) aufliegenden Kraftübertragungskörper (26) aufweist, der von der Druckkraft der mindestens einen Bürstenandruckfeder (16) in Richtung der Köcherachse (156) beaufschlagt ist, **dadurch gekennzeichnet, daß** die Keilflächen (23, 24) an den Bürstenteilen (21, 22) durch Keileinschnitte (29, 30) gebildet sind, die in den einander zugekehrten Seitenflächen (211, 221) der Bürstenteile (21, 22) eingebracht sind, daß der Kraftübertragungskörper (26) in den Keileinschnitten (29, 30) aufgenommen ist und daß das Kraftübertragungsglied (20) ein Koppelelement (28) aufweist, das einerseits eine Abstützfläche für die mindestens eine Bürstenandruckfeder (16) bildet und andererseits in den Zwischenraum zwischen den beiden beabstandete Bürstenteilen (21, 22) hineinragt und unter der Druckkraft der mindestens einen Bürstenandruckfeder (16) an dem Kraftübertragungskörper (26) kraftschlüssig anliegt.

2. Bürstenhalter nach Anspruch 1, **dadurch gekennzeichnet, daß** die Keileinschnitte (29, 30) etwa mittig in die Seitenflächen (211, 221) der beiden Bürstenteile (21, 22) eingebracht sind und vorzugsweise daß die Keileinschnitte (29, 30), der Kraftübertragungskörper (26) und das Koppelelement (28) sich jeweils über die gesamte in Achsrichtung des Kommutators (10) gesehene Länge der beiden Bürstenteile (21, 22) erstrecken.

3. Bürstenhalter nach Anspruch 1 oder 2, **dadurch gekennzeichnet, daß** der Kraftübertragungskörper (26) eine Walze (25) ist.

4. Bürstenhalter nach einem der Ansprüche 1 bis 3, **dadurch gekennzeichnet, daß** das Koppelelement (28) ein T-Profil (27) ist.

5. Bürstenhalter nach Anspruch 1 oder 2, **dadurch gekennzeichnet, daß** Koppelelement (28) und Kraftübertragungskörper (26) von einem einstückigen, partiell biegeelastischen Formteil (33) gebildet sind

6. Bürstenhalter nach Anspruch 5, **dadurch gekennzeichnet, daß** das Formteil (33) im Übergangsbereich von Koppelelement (28) und Kraftübertragungskörper (26) einen biegeelastischen Abschnitt (331) aufweist.

7. Bürstenhalter nach Anspruch 5 oder 6, **dadurch gekennzeichnet, daß** der Kraftübertragungskörper (26) zumindest im Bereich seiner Auflageflächen auf den Keilflächen (23, 24) eine zylinderförmig gewölbte Außenkontur aufweist.

8. Bürstenhalter nach einem der Ansprüche 1 bis 7, **dadurch gekennzeichnet, daß** jedes Bürstenteil (21, 22) im Bereich oberhalb des Keileinschnitts (29, 30) eine bezüglich der in Achsrichtung des Kommutators (10) gesehene Länge der Bürstenteile (21, 22) etwa mittige Aussparung (31,32) aufweist.

## Claims

1. Brushholder for an electrical machine having a commutator (10), in particular for a DC motor in motor vehicles, having a cartridge (15), which has a clear opening in the corner, having a brush (17), which is accommodated in the cartridge (15) such that it can be displaced along the axis of the cartridge (156) and is composed of two brush parts (21, 22) which are in electrical contact with one another, and having at least one brush contact spring (16), which acts on the brush (17) so as to push it out of the cartridge (15) in the direction of the axis of the cartridge (156), the two brush parts (21, 22) being essentially parallelepipedal and being arranged such that they are spaced apart parallel next to one another in the cartridge (15) and such that they protrude beyond the commutator-side cartridge edge (151), and spreading means engaging between the two brush parts (21, 22) such that the side faces (211, 221), which face away from one another, of the two brush parts (21, 22) are placed, in a force-fitting manner, against cartridge walls (152, 153) which lie opposite one another in the circumferential direction of the commutator (10), the spreading means having a force transfer element (20), which is arranged between the at least one brush contact spring (16) and the brush parts (21, 22) and derives force components (F_{K}), directed towards the cartridge walls (152, 153), from the pressure force (F_{D}) of the at least one brush contact spring (16), and the force transfer element (20) having two wedge faces (23, 24), which extend at an angle of inclination (β) with respect to the axis of the cartridge (156) and of which one is fitted in each brush part (21, 22) such that the wedge faces (23, 24) face one another, and having a force transfer body (26), which rests on the wedge faces (23, 24) and is subjected to the pressure force of the at least one brush contact spring (16) in the direction of the axis of the cartridge (156), **characterized in that** the wedge faces (23, 24) are formed on the brush parts (21, 22) by wedge notches (29, 30) which are introduced into the mutually facing side faces (211, 221) of the brush parts (21, 22), **in that** the force transfer body (26) is accommodated in the wedge notches (29, 30), and **in that** the force transfer element (20) has a coupling element (28), which, on the one hand, forms a supporting surface for the at least one brush contact spring (16), and, on the other hand, protrudes into the intermediate space between the two spaced-apart brush parts (21, 22) and bears in a force-fitting manner against the force transfer body (26) under the pressure force of the at least one brush contact spring (16).

2. Brushholder according to Claim 1, **characterized in that** the wedge notches (29, 30) are introduced approximately centrally into the side faces (211, 221) of the two brush parts (21, 22), and preferably **in that** the wedge notches (29, 30), the force transfer body (26) and the coupling element (28) each extend over the entire length, when viewed in the axial direction of the commutator (10), of the two brush parts (21, 22).

3. Brushholder according to Claim 1 or 2, **characterized in that** the force transfer body (26) is a roller (25).

4. Brushholder according to one of Claims 1 to 3, **characterized in that** the coupling element (28) is a T profile (27).

5. Brushholder according to Claim 1 or 2, **characterized in that** the coupling element (28) and the force transfer body (26) are formed by an integral, partially flexible shaped part (33).

6. Brushholder according to Claim 5, **characterized in that** the shaped part (33) has a flexible section (331) in the transition region between the coupling element (28) and the force transfer body (26) .

7. Brushholder according to Claim 5 or 6, **characterized in that** the force transfer body (26) has an outer contour with a cylindrical curvature, at least in the region of its faces which rest on the wedge faces (23, 24).

8. Brushholder according to one of Claims 1 to 7, **characterized in that**, in the region above the wedge notch (29, 30), each brush part (21, 22) has a cutout (31, 32) which is approximately central with respect to the length, when viewed in the axial direction of the commutator (10), of the brush parts (21, 22).

## Revendications

1. Porte-balai d'une machine électrique à collecteur (10), notamment pour un moteur à courant continu de véhicule automobile, comprenant un porte-balai tubulaire (15) à section libre polygonale,
un balai (17) logé de manière coulissante dans le porte-balai (15) suivant l'axe (156) de celui-ci, ce balai se composant de deux parties (21, 22) en contact électrique l'une avec l'autre, et
au moins un ressort de poussée de balai (16) sollicitant au moins l'une des balais (17) dans la direction de l'axe (156) du porte-balai pour le pousser hors du porte-balai (15),
les deux parties de balai (21, 22) ayant une forme essentiellement parallélépipédique sont juxtaposées de manière parallèle l'une par rapport à l'autre dans le porte-balai (15), écartées, et dépassant du bord du porte-balai (151) du côté du collecteur, des moyens d'écartement agissant entre les deux parties de balai (21, 22) pour que les surfaces latérales (211, 221) opposées des deux parties de balai (21, 22) soient appliquées par une liaison de force contre l'une des parois (152, 153) du porte-balai, parois en regard l'une de l'autre dans la direction périphérique du collecteur (10),
les moyens d'écartement comprenant un élément de transmission de force (20) installé entre au moins un ressort de poussée de balai (16) et les parties de balai (21, 22), cet organe de transmission dérivant de la force de poussée (F_{D}) d'au moins un ressort de poussée de balai (16) des composantes de force (F_{K}) dirigées vers les parois (152, 153) du porte-balai et
l'élément de transmission de force (20) ayant deux surfaces en coin (23, 24) faisant un angle aigu (β) par rapport à l'axe (156) du porte-balai, l'une chaque fois des surfaces en coin étant associée à une partie de balai (21, 22) pour que les surfaces en coin (23, 24) soient tournées l'une vers l'autre, ainsi qu'un élément de transmission de force (26) appliqué contre les surfaces en coin (23, 24), cet élément étant sollicité dans la direction de l'axe (156) du porte-balai par la poussée exercée par au moins un ressort de poussée de balai (16),
**caractérisé en ce que**
les surfaces en coin (23, 24) des parties de balai (21, 22) sont formées par des encoches cunéiformes (29, 30) réalisées dans les surfaces latérales (211, 221) en regard des parties de balai (21, 22),
l'organe de transmission de force (26) est logé dans les encoches cunéiformes (29, 30), et
l'élément de transmission de force (20) comporte un élément de couplage (28) formant d'un côté une surface d'appui pour au moins un ressort de poussée de balai (16) et de l'autre côté pénètre dans l'intervalle entre les deux parties de balai (21, 22) écartées et s'appuie par une liaison de force sous la poussée d'au moins un ressort de poussée de balai (16) contre l'élément de transmission de force (26).

2. Porte-balai selon la revendication 1,
**caractérisé en ce que**
les encoches cunéiformes (29, 30) sont réalisés sensiblement au milieu des surfaces latérales (211, 221) des deux parties de balai (21, 22), et
de préférence les encoches cunéiformes (29, 30), l'organe de transmission de force (26) et l'élément de couplage (28) s'étendent chaque fois sur toute la longueur des deux parties de balai (21, 22) correspondant à la direction axiale du collecteur (10).

3. Porte-balai selon la revendication 1 ou 2,
**caractérisé en ce que**
l'élément de transmission de force (26) est un rouleau (25).

4. Porte-balai selon l'une des revendications 1 à 3,
**caractérisé en ce que**
l'élément de couplage (28) a une section en T (27).

5. Porte-balai selon la revendication 1 ou 2,
**caractérisé en ce que**
l'élément de couplage (28) et l'organe de transmission de force (26) sont réalisés par une pièce (33) mise en forme, en une seule partie, partiellement élastique en flexion.

6. Porte-balai selon la revendication 5,
**caractérisé en ce que**
la pièce de forme (33) comporte un segment élastique en flexion (331) dans la zone transitoire entre l'élément de couplage (28) et l'organe de transmission de force (26).

7. Porte-balai selon la revendication 5 ou 6,
**caractérisé en ce que**
l'organe de transmission de force (26) comporte un contour extérieur bombé de forme cylindrique au moins au niveau de sa surface d'appui contre les surfaces cunéiformes (23, 24).

8. Porte-balai selon l'une des revendications 1 à 7,
**caractérisé en ce que**
chacune des parties de balai (21, 22) comporte dans la zone au-dessus de l'encoche cunéiforme (29, 30) une découpe (31, 32) sensiblement centrale par rapport à la longueur des parties de balai (21, 22) prises dans la direction axiale du collecteur (10).
